# EUROPEAN PATENT SPECIFICATION

(11) **EP 3 691 297 B1**
(45) Date of publication and mention of the grant of the patent: **17.07.2024**
(21) Application number: 19154522.7
(22) Date of filing: 30.01.2019
(51) Int. Cl.: H04R 29/00, G06F 3/01

(54) **TEST ARRANGEMENT AND TEST METHOD**
TESTANORDNUNG UND TESTVERFAHREN
AGENCEMENT ET PROCÉDÉ D'ESSAI

(43) Date of publication of application: 05.08.2020
(73) Proprietor: Rohde & Schwarz GmbH & Co. KG, 81671 München (DE)
(72) Inventor: NASEEF, Mahmud, 82152 Planegg (DE); REIMER, Christian, 83527 Haag i. OB (DE)
(74) Representative: Novagraaf Group

(56) References cited:
- US-A1- 2008 043 996
- US-A1- 2013 304 475
- US-B1- 6 674 865

## Description

### TECHNICAL FIELD

The present invention relates to a test arrangement and a test method. In particular, the present invention relates to testing an automotive infotainment system of a vehicle.

### RELATED ART

US 2008/043996 A1 describes an arrangement for controlling audio levels according to user selectable features. The system receives a user selection for an alternate mode for audio device. A monitor monitors audio levels in a physical area and the system switches an audio device from a current mode to the alternate mode when the monitored audio level exceeds a predetermined threshold.

US 6674865 B1 describes an automatic gain control for a cabin communication system with a microphone for receiving the spoken voice and the ambient noise and for converting the spoken voice and the ambient noise into a first audio signal having a first component corresponding to the spoken voice and a second component corresponding to the ambient noise and a filter for removing the second component from the first audio signal.

US 2013/304475 A1 describes a method of configuring an acoustics system of a convertible vehicle to receive speech from an occupant of the vehicle who is using hand-free technology. The position of the top of the convertible is determined and based upon whether the top is up or down, an audio reception configuration is selected.

Although applicable in principle to any kind of infotainment system, the present invention and its underlying problem will be described hereinafter with testing an infotainment system of a vehicle.

The elements of an infotainment system become increasingly important for modern vehicles. An infotainment system of a vehicle may comprise sound devices, displays/video devices, elements for assisting the user to drive the vehicle such as a navigation system, communication devices for establishing a voice and/or data communication, maintenance systems, and many further components. The individual elements of an infotainment system may be manufactured by multiple different manufacturers. Each manufacture may test its products separately. Accordingly, each manufacture may only apply tests which can guarantee a quality of an individual component of the infotainment system.

However, such individual tests of single components of the infotainment system may not take into account interaction with further components of the infotainment system for other devices of the vehicle. Thus, interferences between the individual components and malfunctions resulting from such interferences may not be detected when individually testing the elements of the infotainment system.

Against this background, a problem addressed by the present invention is to provide a reliable testing of an infotainment system, in particular an automotive infotainment system of a vehicle which may take in to account interactions between individual components of the infotainment system.

### SUMMARY

The present invention solves this problem with a test arrangement and test method with the features of the independent claims 1 and 14. Further advantageous embodiments are subject matter of the dependent claims.

The present invention is based on the finding that modern automotive infotainment systems may form a complex system of multiple devices interacting with each other and with further components of the vehicle. Accordingly, an integral testing of the individual devices of the automotive infotainment system may not be able to verify a proper and correct interaction of the individual devices of the automotive infotainment system. In particular, by considering only individual components of the automotive infotainment system may not be able to detect interferences or disturbances when the individual devices have to interact with each other.

The present invention therefore takes into account this finding and aims to provide an improved testing of an automotive infotainment system which can perform an analysis of the automotive infotainment system as a whole. In particular, the present invention aims to determine a user experience which can be achieved by the automotive infotainment system as a whole, i.e. by considering multiple user experience parameters relating to multiple components of the automotive infotainment system. In this way, it is possible to take into account the interaction of the individual components of the automotive infotainment system.

The test data generator of the test arrangement may generate any kind of data which may be appropriate for testing the automotive infotainment system. In particular, the test data generator may generate any kind of data for testing the individual components of the infotainment system. For this purpose, the test data generator may generate audio data which may be provided to audio components of the infotainment system, or media data such as images, video data or the like which may be reproduced by the infotainment system. Furthermore, the test data may comprise data for a navigation system, for example traffic information, route data or the like. The test data may also comprise updates, for example an update of a map for a navigation system which may be locally stored in a memory of the infotainment system, or a software update for a device of the infotainment system. The test data may also comprise control data for controlling a device of the infotainment system, communication data for a voice or data communication between the infotainment system and a communication partner, or any other kind of data which are appropriate for the infotainment system.

The test data generator may establish a wired or wireless communication link with one or more devices of the automotive infotainment system for providing the test data. Furthermore, the test data generator may also receive data from one or more components of the automotive infotainment system via the communication link. Accordingly, a bidirectional communication may be established between the test data generator and the automotive infotainment system.

The test data generator may be a single device which provides test data for all components of the automotive infotainment system. Accordingly, the single device of the test data generator may provide audio data, video data, media data, communication data, maintenance data, etc. However, it may be also possible to use a test data generator comprising multiple data generator devices. For example, separate test data generating devices may be used for generating communication data, for example for a voice or data communication between the infotainment system and a communication partner, for generating audio, video or media data, for generating navigation data, maintenance data, etc. However, it is understood that any combination is possible. For example, the test data generating device may provide data for a number of two or more components of the automotive infotainment system, and further test data generating device may provide data for a number of one or more further devices of the automotive infotainment system. Furthermore, it may be also possible that multiple test data generating devices provide data for a single component of the automotive infotainment system.

The analyzing device may be any kind of device which can measure a response of the automotive infotainment system to the provided test data. For example, the analyzing device may be connected to the automotive infotainment system by a wired or wireless communication link. Accordingly, the analyzing device may receive signals which are generated by components of the automotive infotainment system or which are received by input devices of the automotive infotainment system. For example, a microphone of the infotainment system may receive audio signals which may be forwarded as an analog or digital signal to the analyzing device. Furthermore, a camera may capture images, for example still images or an image sequence which may be forwarded to the analyzing device. However, any other kind of input device of the infotainment system may be also used to provide data which may be received by the analyzing device. Furthermore, the test system may comprise separate input devices or sensors which may acquire data, for example audio data, video data or the like. The data acquired by the additional input devices or sensors may be provided to the analyzing device for further analysis.

The processing device may receive the measurement result from the analyzing device and evaluate the measured response in order to assess a user experience provided by the automotive infotainment system. For this purpose, the processing device may determine a number of at least two user experience parameters. Each user experience parameter may relate to a specific property of the infotainment system. Detailed examples will be described in more detail below. For example, each user experience parameter may relate to a specific component of the automotive infotainment system. However, it may be also possible to determine separate user experience parameters for individual types of user experience. For example, a user experience parameter may relate to an audio experience, a further user experience parameter may relate to an optical user experience, still a further parameter may relate to a voice or data communication. However, it is understood that any other kind of user experience parameter may be also possible, for example a user experience parameter may relate to a navigation, features of an advanced driver assistance system, an update feature, for example an update of a software component or data such as a map for navigation system, maintenance etc. In particular, the individual user experience parameters may be determined based on the measurements provided by the analyzing device.

For an appropriate assessment of the user experience of the automotive infotainment system, multiple user experience parameters are determined. As already mentioned above, at least two user experience parameters are determined. However, it may be possible to determine even more than two user experience parameters, for example three, four, five or more user experience parameters. Especially, it is possible to determine all available or possible user experience parameters in combination by the processing device.

For determining the user experience parameters, the processing device may take into account the measured response from the automotive infotainment system provided by the analyzing device. Furthermore, the processing device may also take into account the test data provided by the test data generator to the automotive infotainment system. Accordingly, the processing device may compare the measured response with the related test data in order to evaluate the response when determining the user experience parameters.

For computing the user experience parameters, the processing device may apply any appropriate approach. For example, the processing device may compute standardized values for the user experience parameters within a predetermined range. For example, a user experience parameter may relate to a value between zero and 100 % or between zero and 255 representing a binary value of 8 bits. However, any other range for specifying the user experience value may be also possible.

Further embodiments of the present invention are subject of the further subclaims and of the following description, referring to the drawings.

The number of the at least two user experience parameters comprises at least two parameters out of the following group: audio parameters, video parameters, media parameters, camera parameters, data transmission parameters, maintenance parameters or navigation parameters.

Audio parameters may relate to an audio signal reproduced by the automotive infotainment system and/or an audio signal acquired by the automotive infotainment system. For example, an audio parameter may relate to a quality of music played by the automotive infotainment system, acoustical alert sounds output by the infotainment system, a quality of speech reproduced by the automotive infotainment system, for example for a voice communication, etc. Further, the audio parameters may relate to the quality of audio signals received by the infotainment system, for example speech commands which may be provided by a user for controlling the automotive infotainment system, or a speech of the user which may be received for a voice communication with a further communication partner. Video parameters may relate to optical data, for examples images or image sequences reproduced on a display or images captured by a camera. Media parameters may relate to any kind of media reproduced by the automotive infotainment system. Camera parameters may relate to any kind of image data of still images or image sequences captured one or more cameras, for example a dash camera of the vehicle, a camera of a driver assistance system or a camera monitoring the attention of the driver. Data transmission parameters may relate to the quality of a data transmission between the automotive infotainment system and a further communication partner, for example by a wireless communication. Such a wireless communication may be based, for example on a communication according to GSM, UMTS, LTE, 5G, etc. The wireless communication may also comprise communications based on Bluetooth, WIFI or any other known or upcoming communication standard. Maintenance parameters may relate, for example to parameters or performing maintenance, such as updating a software component or a database of a device of the automotive infotainment system. Furthermore, the maintenance data may relate to log data for other? data protocoling an operation of the infotainment system. Navigation parameters may relate, for example to data for computing a route to a specific destination, for example traffic information relating to a specific route. Furthermore, the navigation data may relate to an intermediate destination, points of interest or auxiliary data related to a navigation.

In a possible embodiment, the test data generator is adapted to selectively degrade a signal of the generated test data. The processing device may be configured to analyze the response of the automotive infotainment system to the degraded signal.

The test data generator may degrade the signal of the test data, for example by level, frequency, sharpness, signal to noise ratio, noise or any other property. For example, interruptions may be included into the signal of the test data, a clipping may be applied or any other kind of degradation may be applied. In context of images, the resolution may be degraded, images of an image sequence may be skipped, etc. For assessing data transmission properties, disturbances may be applied to the data transmission, a Doppler effect or the like may be simulated, or any other kind of degradation may be applied. Accordingly, an impact of the response to the degraded signals of the test data may be evaluated when determining the respective user experience parameter.

In a possible embodiment, the processing device is adapted to compute a combined single user experience parameter based on at least two user experience parameters. In particular, a single user experience parameter may be computed based on all individual determined user experience parameters. For example, a mean value may be computed based on the multiple individual user experience parameters. In particular, an average value, a median or any other kind of approach for determining a single user experience value may be possible. Furthermore, it may be also possible to determine a standard deviation or another characterizing value for specifying the relationship between the computed single user experience value and the determined number of user experience values may be possible.

In a possible embodiment, the test arrangement comprises a data interface. The data interface may be adapted to be connected to a data storage device. The processing device may be adapted to store the determined user experience parameters or the computed single user experience parameter in the data storage device.

The storage device may be any kind of appropriate storage device. For example, the storage device may be an internal memory of the test arrangement. However, it may be also possible to store the determined user experience parameters in an external storage device, for example a storage device of a cloud. It may be also possible to store the user experience parameters, for example, on a USB stick, a secured data (SD) card or the like.

In a possible embodiment, the processing device is configured to determine the user experience parameters based on a predetermined categorization. In particular, it may be possible to determine individual user experience parameters for multiple predetermined categorizations.

In a possible embodiment, the predetermined categorizations may comprise, for example, a classification by country, cultural perception, vehicle category, vehicle configuration and/or use of the vehicle.

For example, a particular impact of user experience depending on a specific country or specific cultural perceptions may be defined. Accordingly, an individual rating of multiple factors may be applied when determining a user experience parameter. For example, individual color schemes may be applied depending on an associate country or cultural perception.

Furthermore, it may be also possible, for example, to categorize the user experience parameters depending on a vehicle category, for example by differentiating between small cars, medium cars, large cars, or by differentiating between passenger cars, trucks or the like. It may be also possible to differentiate between different use cases, for example between private use, commercial use, transportation of persons (taxi) etc. However, any other approach for classification may be possible, too.

In a possible embodiment, the test arrangement comprises at least one measuring device. The measuring device may be adapted to measure an output of the automotive infotainment system. The measured output may be provided to the analyzing device.

For example, the measuring device may comprise a device for measuring audio signals such as sound, speech or the like. For this purpose, a microphone may be used. It may be also possible to use an arrangement of multiple microphones. In particular, the one or more microphones may be located at predetermined spatial positions within the car, in particular within the cabin of the car. Furthermore, it may be possible to measure visual output of the infotainment system by one or more cameras, in particular high resolution cameras. In this way, visual output of the infotainment system may be acquired and measured. However, it is understood that any other kind of measurement device or sensor may be used for measuring an output of the infotainment system.

In a possible embodiment, the test arrangement comprises at least one output device. The output device may be adapted to provide an output signal to the automotive infotainment system. In particular, the output of the output device may be based on test data provided by the test data generator.

In this way, the output device may provide any kind of appropriate input signals to the infotainment system. For example, a loudspeaker may be used for outputting audio signals such as sounds or speech to the infotainment system. In this way, a speech recognition of the infotainment system may be analyzed. Furthermore, optical output may be provided to optical sensors of the infotainment system, for example to cameras or other sensors. In this way, for example gestures or the like may be simulated to the infotainment system. However, it is understood that any other kind of user action may be simulated by appropriate output devices. The output device may comprise, for example, acoustical signals, optical signals, haptic operations, etc.

In a possible embodiment, the test data generator may be adapted to generate test data according to a predetermined test scenario.

For example, multiple test scenarios may be defined in advance. Accordingly, the defined test scenarios may be stored in a memory, in particular a memory of the test data generator or a storage device communicatively coupled to the test data generator. In this way, the test data generator may apply a test of the automotive infotainment system based on the predetermined test scenario.

In a possible embodiment, the test data generator is configured to simulate a predetermined environmental condition, spatial position, driving situation and/or temporal condition.

For example, specific light scenes may be simulated or external acoustical impact such as rain drops on the windshield or a siren of an ambulance, noise of an air conditioner or the like may be simulated. However, any other condition, in particular any kind of external condition may be simulated.

In a possible embodiment, the test arrangement may comprise a user interface. The user interface may be adapted to receive a user input for specifying a user experience score. The processing device may be adapted to determine at least one of the user experience parameters based on the received user experience score.

By receiving manual input from a user, a realistic perception of a user may be obtained when testing the automotive infotainment system. For example, the user interface may provide specific input elements for receiving a user experience score based on the output of the infotainment system currently provided.

In a possible embodiment, the processing device is configured to provide the determined user experience parameters to a neural network. In particular, the user experience parameters may be used for training the neural network.

In a possible embodiment, the neural network is configured to control at least one device of the automotive infotainment system. Accordingly, the configuration of the automotive infotainment system may be adapted and improved based on the respective user experience parameters.

With the present invention it is therefore now possible to evaluate the operation of an automotive infotainment system of a vehicle as a whole. By providing test data to the infotainment system and evaluating the user experience when testing the whole infotainment system of the vehicle, an integral assessment of the operation of the infotainment system can be achieved.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, wherein:
- Fig. 1: shows a block diagram of a test arrangement according to an embodiment of the present invention;
- Fig. 2: shows a block diagram of a test arrangement according to a further embodiment;
- Fig. 3: shows a block diagram of a test arrangement according to a still further embodiment; and
- Fig. 4: shows a flow diagram of a test method according to an embodiment of the present invention.

The appended drawings are intended to provide further understanding of the embodiment of the invention. They illustrate embodiments and, in conjunction with the drawings, help to explain principles and concepts of the invention. Further embodiments and many of the advantages mentioned below become apparent in view of the drawings. The elements in the drawings are not necessarily shown in scale.

In the drawings, same, functionally equivalent and identical operating elements, features and components are provided with same reference signs in each case, unless stated otherwise.

### DETAILED DESCRIPTION OF THE DRAWINGS

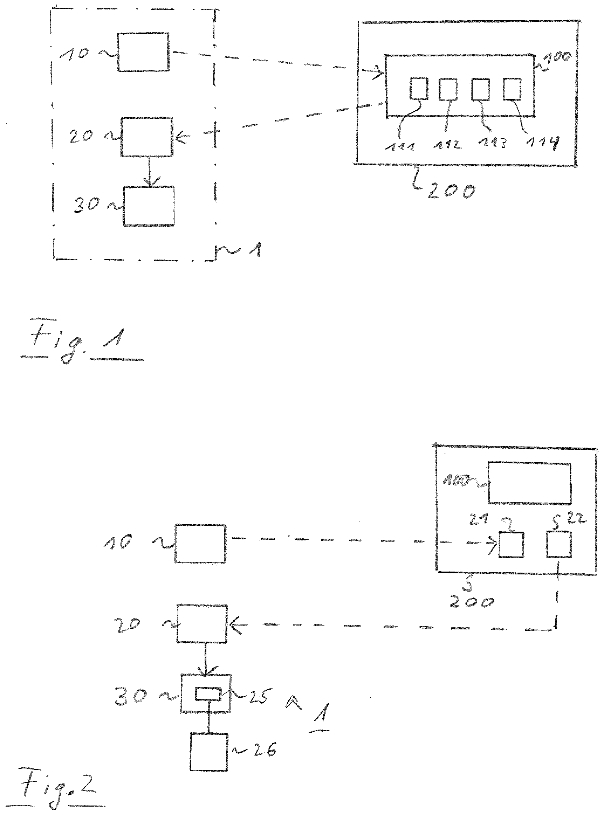

Fig. 1 shows a block diagram of a test arrangement 1 for testing an automotive infotainment system 100 of a vehicle 200. The automotive infotainment system 100 may comprise multiple devices 111-114. Each device 111-114 of the infotainment system 100 may provide specific features. For example, a first device 111 may relate to an audio system for playing music. A second device 112 may relate to a navigation system. A third device 113 may relate to a communication device for establishing a wireless communication to a communication partner. For example, the communication system may relate to a wireless communication via GSM, UMTS, LTE, 5G, etc. A fourth device 114 may relate to a media device for reproducing media content. It is understood that the mentioned examples of infotainment devices 111-114 only show exemplary devices. The infotainment system 100 is not limited to these examples. Moreover, the infotainment system 100 may comprise any number of infotainment system devices which are not limited by the before mentioned examples.

Test arrangement 1 for testing the automotive infotainment system 100 comprises a test data generator 10, an analyzing device 20 and a processing device 30. Test data generator 10 may generate test data for testing the infotainment system 100. For this purpose, a communication link between the test data generator 10 and the infotainment system 100 may be established. The communication link may comprise a wired and/or wireless communication link. It may even be possible to establish a number of two or more communication links between test data generator 10 and the infotainment system 100. Further, test data generator 10 may comprise multiple components. For example, separate components may be used for testing multiple functionalities of the infotainment system 100. A first component of test data generator 10 may be used for audio tests, a further component may be used for media tests, still a further component may be used for testing navigation functionalities, etc. It may be also possible to provide components for testing the communication properties of the infotainment system 100 with communication partners, for testing maintenance features, update functionalities or any other functionality of the infotainment system 100. The testing and in particular the generation of the test data may be performed by a single test data generator 10. Furthermore, it may be possible to use multiple device for performing the tests which are combined in a single test data generator 10, or it may be even possible to use multiple devices which are arranged at different spatial positions.

By establishing a communication link between test data generator 10 and the infotainment system 100 and by providing test data to the infotainment system 100, it is possible to perform a testing of the infotainment system 100. Accordingly, the response of the infotainment system 100 to the provided test data is measured by analyzing device 20. For example, analyzing device 20 may receive signals from the infotainment system 100 in response to the provided test data. For this purpose, a number of one or more wired or wireless communication links between the infotainment system 100 and the analyzing device 20 may be established.

For example, analyzing device 20 may receive data relating to audio signals of the infotainment system 100. Analyzing device 20 may also receive image data from the infotainment system 100 or any other kind of data, for example data relating to a maintenance operation, an update procedure, for example data relating to an update of a software component or an update of data in a memory of the infotainment system, for example data relating to an updated map of a navigation system or the like. Furthermore, any other kind of data from the infotainment system 100 may be received by analyzing device 20.

For example, a microphone of the infotainment system 100 may be used for receiving/measuring audio signals provided by the infotainment system 100. Furthermore, a camera of the infotainment system 100 may acquire images of an optical output. However, any other input device or sensor of the infotainment system 100 may be used for acquiring data which may be provided to analyzing device 20. Furthermore, additional measurement devices or sensors may be used for acquiring data. This will be described in more detail below.

The data which have been acquired by analyzing device 20 may be provided to a processing device 30. Furthermore, processing device 30 may be communicatively coupled with test data generator 10. In this way, processing device 30 may also receive information relating to the test data which have been provided to the infotainment system 100. Based on the data from analyzing device 20, and - if available - the information relating to the generated test data may be analyzed in order to determine a number of user experience parameters. A user experience parameter may describe a measure for specifying an experience or perception of a user in response to output provided by the infotainment system. In particular, multiple separate user experience parameters may be determined. For example, a first user experience parameter may specify an acoustical user experience. For example, the acoustical user experience may be determined based on a volume of provided acoustical signals, a signal to noise ratio of the acoustical signals, a frequency spectrum of the acoustical signals or any other characteristic of acoustical signals provided by the infotainment system 100. The user experience parameter with respect to video data may be determined, for example by taking into account an available framerate, resolution or further characteristic parameters of provided images or image sequences. Furthermore, lost images of an image sequence may be considered or shift between audio and video signals in video sequence may be evaluated. However, any other characteristic which may be appropriate for evaluating a user experience of video signals may be possible, too. When evaluating a voice or data communication with a communication partner, it may be possible to consider an error rate of the communication link, a signal to noise ratio, a data rate for exchanging data on the communication link etc. For evaluating a navigation feature, it may be possible to consider the time which is needed for providing a first result to a user and/or a time which is needed for finishing the whole computation of the route. Furthermore, it may be possible to take into account properties of available points of interest or any other feature in connection with the navigation. In the same way, any other feature of the infotainment system 100 may be evaluated for determining a respective user experience parameter. For example, a speech recognition feature of the infotainment system may be evaluated by outputting speech signals by a loudspeaker of the infotainment system and evaluating the recognized speech commands.

In this way, multiple user experience parameters may be determined by processing device 30. Accordingly, the total performance of the infotainment system 100 may be evaluated based on the determined number of user experience parameters. For example, the user experience parameter may specify a degree of user experience in a predetermined range, for example between zero and 100 % or between zero and 255 (corresponding to a digital number of 8 bits). However, any other kind of measure for defining a user experience may be possible, too.

In order to obtain an overall measure, it may be possible to combine the number of user experience parameters to a single measure. For example, a mean value or average value may be computed. However, it may be also possible to apply any other computational scheme for combining the multiple user experience parameters to a single parameter.

In order to evaluate the performance of the infotainment system 100, test data generator 10 may vary the test data. Accordingly, the impact of the variation of the test data on the respective user experience parameter may be evaluated. For example, test data generator 10 may successively decrease or increase one or more properties in the test data. For example, the audio system of the infotainment system 100 may be evaluated by generating an audio signal, wherein the audio signal is degraded, for example by the level, frequency, sharpness, signal to noise ratio or any other property. For example, noise may be added to the audio signal, the audio signal may be interrupted for specific intervals, a clipping may be applied to the audio signal, surround or three-dimensional sound properties may be degraded or any other kind of degradation may be applied to the audio signal. Accordingly, the output of the infotainment system in response to the degraded audio signal of the test data may be evaluated in order assess the impact on the user experience.

In order to evaluate a speech recognition of the infotainment system 100, it may be possible to provide test data of a speech signal which may be degraded in one or more properties. In particular, the degradation of the speech signal may be similar to the degradation of an audio signal as described above. Further to the above mentioned feature, it may be possible to add audio components representing a traffic noise, noise of an air conditioning or to modify the speech signal to simulate an unprecise kind of speech. In this way, a user experience parameter for determining the degree of speech recognition can be determined.

For evaluating user experience with respect to media features, it may be possible to modify a media signal provided by the test data. For example, the media signal may be degraded by modifying the level of the signal, apply a fading, a phase shift, modifying the video frame sequence, for example skipping some video frames, degrading the signal to noise level, applying a Doppler shift or the like. Accordingly, the media signals which are provided by the infotainment system 100 based on the degraded media signal may be evaluated to determine a respective user experience parameter.

Furthermore, it may be possible to evaluate parameters of data transmission by generating test data wherein the data communication, in particular a wireless communication is influenced, for example by modifying the signal level, the frequency of the data communication, a signal to noise level, applying additional noise, interrupting the communication for specific interfiles, applying Doppler effect or any other impact which may influence the data communication.

In particular, the evaluation of the data communication may be a data communication of mobile communication system, for example GMS, UMTS, LTE, 5G, etc. Furthermore, the evaluation may also relate to a reception of UKW, DAB, DVB/T, ATSC or the like. The data communication may be used for data transmission, in particular for software update, providing information for a navigation system, for example traffic information, an eCal unit etc. Furthermore, the data communication may also consider a WIFI or Bluetooth communication. For example, a Bluetooth communication may be used for coupling a smartphone or for user authentication.

The test system 1 may also evaluate, for example a camera of the infotainment system 100. For example, a camera may be used for monitoring the attention of a driver or for acquiring gestures.

A navigation system of the infotainment system 100 may be evaluated by evaluating the quality of the output signals provided by acoustical signals, for example a speech provided to a user for instructing the user, or by optical signals on a screen, a head-up display or the like. Furthermore, a computation time for determining a specific route may be evaluated, or any other property of navigation system may be taken into account for determining a user experience parameter with respect to the navigation.

It is understood that the present invention is not limited to the above mentioned examples. Furthermore, any feature of the infotainment system 100 may be evaluated in order to determine a corresponding user experience parameter.

Fig. 2 shows a schematic block diagram of a test system 1 according a further embodiment. The embodiment of Fig. 2 mainly corresponds to the previously described embodiment. Thus, the previously provided explanation with respect to Fig. 1 also applies to the embodiment of Fig. 2.

The test system 1 according to Fig. 2 may comprise an output device 21. Output device 21 may be arranged, for example in a cabin of a vehicle 200. Output device 21 may output any kind of signal which may have impact to the infotainment system 100. For example, output device 21 may provide acoustical signals. The acoustical signals may comprise, for example signals relating to a speech for simulating the speech of a user. Output device 21 may also provide noise signals, signals simulating a traffic or other environmental sounds, or a sound simulating an air condition or the like. Output device 21 may also provide optical signals, for example signals simulating a gesture of a user which may be captured by a camera of the infotainment system 100. However, it is understood that the present invention is not limited to the above mentioned examples. Furthermore, any other kind of output may be provided by output device 21. For example, the output may also comprise haptic signals simulating a movement of a user or any other feature. Output device 21 may be communicatively coupled with test data generator 10. Accordingly, the output of output device 21 may be controlled, for example by the test data provided by test data generator 10. In this way, it is possible to simulate an optical, acoustical or haptic operation of a user by output device 21. Accordingly, the response of the infotainment system 100 to the provided output of output device 21 may be taken into account when determining the respective user experience parameters.

Test system 1 may further comprise an input device 22. For example, input device 22 may comprise a number of one or more microphones. The one or more microphones may be arranged at predetermined positions within a cabin of the vehicle. In this way, any kind of acoustical signals such as sound or voice output provided by the infotainment system 100 may be measured by the microphones. Input device 22 may also comprise, for example one or more cameras, in particular high resolution cameras. The cameras may acquire, for example image data of a display of infotainment system 100. In this way, the provided optical information, for example information provided on a head-up display or on a video display providing media data or images with respect to a navigation may be captured by such a camera. Furthermore, any other kind of sensor or measurement device may be also included in input device 22 for acquiring an output of infotainment system 100. Input device 22 may be communicatively coupled with analyzing device 20. In this way, all measurements acquired by input device 22 may be provided to analyzing device 20.

Test system 1 may further comprise an interface 25. Interface 25 may establish a communication link with a storage device 26. For example, storage device 26 may be a USB stick or a secure data card or any other removable storage device. In particular, storage device 26 may be a non-volatile storage device. Additionally or alternatively, storage device 26 may be also a storage device of a cloud computing service. In such a case, a wired or wireless communication link may be established between interface 25 and storage device 26. Accordingly, the determined user experience parameters may be stored in the respective storage device 26. However, it is understood that the user experience parameters may be also stored in an internal memory of test device 1.

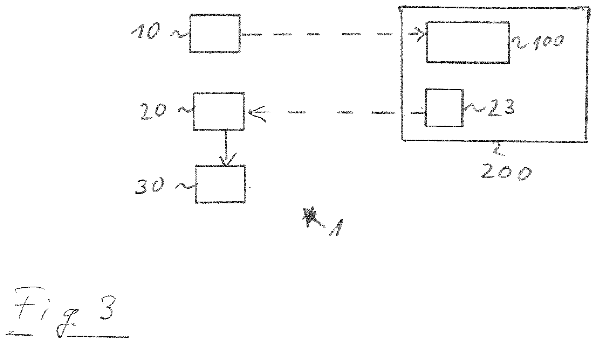

Fig. 3 shows a block diagram of a test device 1 according to still a further embodiment. The embodiment of Fig. 3 mainly corresponds to the previously described embodiments. Thus, the explanation of the previously described embodiments also apply to the embodiment of Fig. 3. The test device in Fig. 3 further comprises a user interface 23. The user interface 23 may receive user input from a user. In particular, the user may manually evaluate the user experience provided by the infotainment system 100. Based on the operation of infotainment system 100, a user may determine a user experience score and input the user experience score to the user interface 23. The input of user interface 23 may be also provided to analyzing device 20 and taken into account when determining the user experience parameter.

The determined user experience parameters may be used for assessing the performance of the infotainment system 100 comprising multiple infotainment components 111-114. Accordingly, an overall assessment of the individual components 111-114 of the infotainment system 100 may be acquired. In particular, individual user experience parameters may be taken into account for characterizing the individual properties of the infotainment system 100.

The determined user experience parameters may be further used for training a neural network. Accordingly, the neural network may be further improved based on the information of the respective user experience parameters. For example, the neural network may be used for controlling one or more operations of the infotainment system 100. In this way, the performance of the infotainment system 100 may be improved by acquiring the individual user experience parameters.

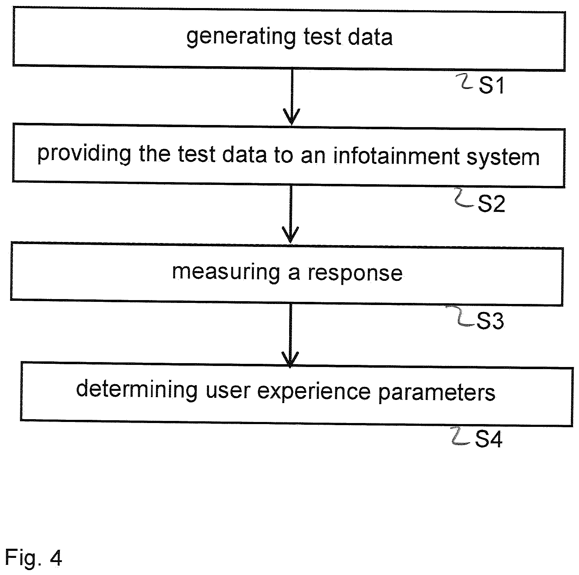

Fig. 4 shows a flow diagram of a test method for testing an automotive infotainment system 100 of a vehicle 200. In a step S1, test data are generated for testing the automotive infotainment system 100. In a step S2, the generated test data are provided to the automotive infotainment system 100. In step S3, a response of the automotive infotainment system 100 to the provided test data is measured. In step S4, a number of at least two user experience parameters is determined based on the measured response of the automotive infotainment system 100.

Furthermore, any other operation which has been described in connection with Fig. 1 to Fig. 3 may be also performed by the test method.

Summarizing, the present invention relates to testing of an infotainment system, in particular an automotive infotainment system of a vehicle. For this purpose, test data are generated and applied to the infotainment system. A response to the applied test data is measured and a number of at least two user experience parameters are determined based on the measured response. In this way, an overall performance of the infotainment system comprising multiple infotainment devices may be evaluated.

## Claims

1. Test arrangement (1) for testing an automotive infotainment system (100) of a vehicle (200), the test arrangement (1) comprising:
a test data generator (10), adapted to generate test data for testing the automotive infotainment system (100) and to provide the generated test data to the automotive infotainment system (100) ;
an analyzing device (20), adapted to measure a response of the automotive infotainment system (100) to the provided test data; and
a processing device (30), adapted to determine a number of at least two user experience parameters based on the measured response of the automotive infotainment system (100),
wherein the analyzing device (20) receives signals which are generated by components of the automotive infotainment system (100) or which are received by input devices of the automotive infotainment system (100),
wherein the processing device (30) compares the measured response with the related test data when determining the user experience parameters, and
wherein the number of at least two user experience parameters comprise at least two parameters of audio parameters, video parameters, media parameters, camera parameters, data transmission parameters, maintenance parameters or navigation parameters of the automotive infotainment system.

2. Test arrangement (1) according to claim 1, wherein the test data generator (10) is adapted to selectively degrade a signal of the generated test data, and
wherein the processing device (30) is configured to analyze an impact of the degradation on the test signal to the response of the automotive infotainment system (100).

3. Test arrangement (1) according to claim 1 or 2, wherein the processing device (30) is adapted to compute a combined single user experience parameter based on the determined at least two user experience parameters.

4. Test arrangement (1) according to any of preceding claims 1 to 3, comprising a data interface (25) adapted to be connected to a data storage device (26),
wherein the processing device (30) is adapted to store the determined user experience parameters in the data storage device (26).

5. Test arrangement (1) according to any of preceding claims 1 to 4, wherein the processing device (30) is configured to determine the user experience parameters based on a predetermined categorization.

6. Test arrangement (1) according to claim 5, wherein the predetermined categorization comprises a classification by country, cultural perception, vehicle category, vehicle configuration and/or use of the vehicle.

7. Test arrangement according to any of preceding claims 1 to 6, comprising at least one input device (22) adapted to measure an output of the automotive infotainment system (100) and to provide the measured output to the analyzing device (20).

8. Test arrangement (1) according to any of preceding claims 1 to 7, comprising at least one output device (21) adapted to provide an output signal to the automotive infotainment system (100) based on test data provided by the test data generator (10) .

9. Test arrangement (1) according to any of preceding claims 1 to 8, wherein the test data generator (10) is adapted to generate test data according to a predetermined test scenario.

10. Test arrangement (1) according to any of preceding claims 1 to 9, wherein the test data generator (10) is configured to simulate a predetermined environmental condition, spatial position, driving situation and/or temporal condition.

11. Test arrangement (1) according to any of preceding claims 1 to 10, comprising a user interface (23) adapted to receive a user input for specifying a user experience score,
wherein the processing device (30) is adapted to determine at least one of the user experience parameters based on the received user experience score.

12. Test arrangement (1) according to any of preceding claims 1 to 11, wherein the processing device (30) is configured to provide the determined user experience parameters to a neural network for training the neural network.

13. Test arrangement (1) according to claim 12, wherein the neural network is configured to control at least one device (111-114) of the automotive infotainment system (100).

14. Test method for testing an automotive infotainment system (100) of a vehicle (200), the method comprising:
generating (S1) test data for testing the automotive infotainment system (100);
providing (S2) the generated test data to the automotive infotainment system (100);
measuring (S3) a response of the automotive infotainment system (100) to the provided test data, wherein signals are received which are generated by components of the automotive infotainment system (100) or which are received by input devices of the automotive infotainment system (100); and
determining (S4) a number of at least two user experience parameters based on the measured response of the automotive infotainment system (100), wherein the measured response is compared with the related test data,
wherein the number of at least two user experience parameters comprise at least two parameters of audio parameters, video parameters, media parameters, camera parameters, data transmission parameters, maintenance parameters or navigation parameters of the automotive infotainment system.

## Patentansprüche

1. Testanordnung (1) zum Testen eines Autmobilinfotainment-Systems (100) eines Fahrzeugs (200), die Testanordnung (1) umfassend:
einen Testdatengenerator (10), der angepasst ist, um Testdaten zum Testen des Autmobilinfotainment-Systems (100) zu generieren und die generierten Testdaten dem Autmobilinfotainment-System (100) bereitzustellen;
eine Analysevorrichtung (20), die angepasst ist, um eine Reaktion des Autmobilinfotainment-Systems (100) auf die bereitgestellten Testdaten zu messen; und
eine Verarbeitungsvorrichtung (30), die angepasst ist, um eine Anzahl von mindestens zwei Benutzererfahrungsparametern basierend auf der gemessenen Reaktion des Autmobilinfotainment-Systems (100) zu bestimmen,
wobei die Analysevorrichtung (20) Signale empfängt, die durch Komponenten des Autmobilinfotainment-Systems (100) generiert werden oder die durch Eingabevorrichtungen des Autmobilinfotainment-Systems (100) empfangen werden,
wobei die Verarbeitungsvorrichtung (30) die gemessene Reaktion mit den zugehörigen Testdaten vergleicht, wenn sie die Benutzererfahrungsparameter bestimmt, und
wobei die Anzahl von mindestens zwei Benutzererfahrungsparametern mindestens zwei Parameter von Audioparametern, Videoparametern, Medienparametern, Kameraparametern, Datenübertragungsparametern, Wartungsparametern oder Navigationsparametern des Autmobilinfotainment-Systems umfasst.

2. Testanordnung (1) nach Anspruch 1, wobei der Testdatengenerator (10) angepasst ist, um ein Signal der generierten Testdaten selektiv zu verschlechtern, und
wobei die Verarbeitungsvorrichtung (30) konfiguriert ist, um eine Auswirkung der Verschlechterung auf das Testsignal auf die Reaktion des Autmobilinfotainment-Systems (100) zu analysieren.

3. Testanordnung (1) nach Anspruch 1 oder 2, wobei die Verarbeitungsvorrichtung (30) angepasst ist, um basierend auf den bestimmten mindestens zwei Benutzererfahrungsparametern einen kombinierten einzelnen Benutzererfahrungsparameter zu berechnen.

4. Testanordnung (1) nach einem der vorstehenden Ansprüche 1 bis 3, umfassend eine Datenschnittstelle (25), die angepasst ist, um mit einer Datenspeichervorrichtung (26) verbunden zu werden,
wobei die Verarbeitungsvorrichtung (30) angepasst ist, um die bestimmten Benutzererfahrungsparameter in der Datenspeichervorrichtung (26) zu speichern.

5. Testanordnung (1) nach einem der vorstehenden Ansprüche 1 bis 4, wobei die Verarbeitungsvorrichtung (30) konfiguriert ist, um die Benutzererfahrungsparameter basierend auf einer zuvor bestimmten Kategorisierung zu bestimmen.

6. Testanordnung (1) nach Anspruch 5, wobei die zuvor bestimmte Kategorisierung eine Einteilung nach Land, kultureller Wahrnehmung, Fahrzeugkategorie, Fahrzeugkonfiguration und/oder Nutzungsmöglichkeit des Fahrzeugs umfasst.

7. Testanordnung nach einem der vorstehenden Ansprüche 1 bis 6, umfassend mindestens eine Eingabevorrichtung (22), die angepasst ist, um eine Ausgabe des Autmobilinfotainment-Systems (100) zu messen und um die gemessene Ausgabe der Analysevorrichtung (20) bereitzustellen.

8. Testanordnung (1) nach einem der vorstehenden Ansprüche 1 bis 7, umfassend mindestens eine Ausgabevorrichtung (21), die angepasst ist, um dem Autmobilinfotainment-System (100) basierend auf Testdaten, die durch den Testdatengenerator (10) bereitgestellt werden, ein Ausgabesignal bereitzustellen.

9. Testanordnung (1)nach einem der vorstehenden Ansprüche 1 bis 8, wobei der Testdatengenerator (10) angepasst ist, um Testdaten gemäß einem zuvor bestimmten Testszenario zu generieren.

10. Testanordnung (1) nach einem der vorstehenden Ansprüche 1 bis 9, wobei der Testdatengenerator (10) konfiguriert ist, um eine zuvor bestimmte Umgebungsbedingung, räumliche Position, Fahrsituation und/oder zeitliche Bedingung zu simulieren.

11. Testanordnung (1) nach einem der vorstehenden Ansprüche 1 bis 10, umfassend eine Benutzerschnittstelle (23), die angepasst ist, um eine Benutzereingabe zum Festlegen einer Benutzererfahrungsbewertung zu empfangen,
wobei die Verarbeitungsvorrichtung (30) angepasst ist, um mindestens einen der Benutzererfahrungsparameter basierend auf der empfangenen Benutzererfahrungsbewertung zu bestimmen.

12. Testanordnung (1) nach einem der vorstehenden Ansprüche 1 bis 11, wobei die Verarbeitungsvorrichtung (30) konfiguriert ist, um die bestimmten Benutzererfahrungsparameter einem neuronalen Netzwerk zum Trainieren des neuronalen Netzwerks bereitzustellen.

13. Testanordnung (1) nach Anspruch 12, wobei das neuronale Netzwerk konfiguriert ist, um mindestens eine Vorrichtung (111-114) des Autmobilinfotainment-Systems (100) zu steuern.

14. Testverfahren zum Testen eines Autmobilinfotainment-Systems (100) eines Fahrzeugs (200), das Verfahren umfassend:
Generieren (S1) von Testdaten zum Testen des Autmobilinfotainment-Systems (100);
Bereitstellen (S2) der generierten Testdaten an das Autmobilinfotainment-System (100);
Messen (S3) einer Reaktion des Autmobilinfotainment-Systems (100) auf die bereitgestellten Testdaten, wobei Signale empfangen werden, die durch Komponenten des Autmobilinfotainment-Systems (100) generiert werden oder die durch Eingabevorrichtungen des Autmobilinfotainment-Systems (100) empfangen werden; und
Bestimmen (S4) einer Anzahl von mindestens zwei Benutzererfahrungsparametern basierend auf der gemessenen Reaktion des Autmobilinfotainment-Systems (100), wobei die gemessene Reaktion mit den zugehörigen Testdaten verglichen wird,
wobei die Anzahl von mindestens zwei Benutzererfahrungsparametern mindestens zwei Parameter von Audioparametern, Videoparametern, Medienparametern, Kameraparametern, Datenübertragungsparametern, Wartungsparametern oder Navigationsparametern des Autmobilinfotainment-Systems umfasst.

## Revendications

1. Dispositif d'essai (1) destiné à tester un système d'infodivertissement automobile (100) d'un véhicule (200), le dispositif d'essai (1) comprenant :
un générateur de données d'essai (10), adapté pour générer des données d'essai pour tester le système d'infodivertissement automobile (100) et pour fournir les données d'essai générées au système d'infodivertissement automobile (100) ;
un dispositif d'analyse (20), adapté pour mesurer une réponse du système d'infodivertissement automobile (100) aux données d'essai fournies ; et
un dispositif de traitement (30), adapté pour déterminer un certain nombre d'au moins deux paramètres d'expérience utilisateur sur la base de la réponse mesurée du système d'infodivertissement automobile (100),
dans lequel le dispositif d'analyse (20) reçoit des signaux générés par des composants du système d'infodivertissement automobile (100) ou reçus par des dispositifs d'entrée du système d'infodivertissement automobile (100),
dans lequel le dispositif de traitement (30) compare la réponse mesurée aux données d'essai correspondantes lors de la détermination des paramètres de l'expérience utilisateur, et
dans lequel le nombre d'au moins deux paramètres d'expérience utilisateur comprend au moins deux paramètres parmi les paramètres audio, les paramètres vidéo, les paramètres média, les paramètres de caméra, les paramètres de transmission de données, les paramètres de maintenance ou les paramètres de navigation du système d'infodivertissement automobile.

2. Dispositif d'essai (1) selon la revendication 1, dans lequel le générateur de données d'essai (10) est adapté pour dégrader sélectivement un signal des données d'essai générées, et
dans lequel le dispositif de traitement (30) est configuré pour analyser l'impact de la dégradation du signal d'essai sur la réponse du système d'infodivertissement automobile (100).

3. Dispositif d'essai (1) selon la revendication 1 ou 2, dans lequel le dispositif de traitement (30) est adapté pour calculer un paramètre d'expérience utilisateur unique combiné sur la base des au moins deux paramètres d'expérience utilisateur déterminés.

4. Dispositif d'essai (1) selon l'une des revendications précédentes 1 à 3, comprenant une interface de données (25) adaptée pour être connectée à un dispositif de stockage de données (26),
le dispositif de traitement (30) est adapté pour stocker les paramètres d'expérience utilisateur déterminés dans le dispositif de stockage de données (26).

5. Dispositif d'essai (1) selon l'une des revendications précédentes 1 à 4, dans lequel le dispositif de traitement (30) est configuré pour déterminer les paramètres de l'expérience utilisateur sur la base d'une catégorisation prédéterminée.

6. Dispositif d'essai (1) selon la revendication 5, dans lequel la catégorisation prédéterminée comprend une classification par pays, par perception culturelle, par catégorie de véhicule, par configuration du véhicule et/ou par utilisation du véhicule.

7. Dispositif d'essai selon l'une des revendications précédentes 1 à 6, comprenant au moins un dispositif d'entrée (22) adapté pour mesurer une sortie du système d'infodivertissement automobile (100) et pour fournir la sortie mesurée au dispositif d'analyse (20).

8. Dispositif d'essai (1) selon l'une des revendications précédentes 1 à 7, comprenant au moins un dispositif de sortie (21) adapté pour fournir un signal de sortie au système d'infodivertissement automobile (100) sur la base des données d'essai fournies par le générateur de données d'essai (10).

9. Dispositif d'essai (1) selon l'une des revendications précédentes 1 à 8, dans lequel le générateur de données d'essai (10) est adapté pour générer des données d'essai selon un scénario d'essai prédéterminé.

10. Dispositif d'essai (1) selon l'une des revendications précédentes 1 à 9, dans lequel le générateur de données d'essai (10) est configuré pour simuler une condition environnementale, une position spatiale, une situation de conduite et/ou une condition temporelle prédéterminées.

11. Dispositif d'essai (1) selon l'une des revendications précédentes 1 à 10, comprenant une interface utilisateur (23) adaptée pour recevoir une entrée utilisateur afin de spécifier un score d'expérience utilisateur,
dans lequel le dispositif de traitement (30) est adapté pour déterminer au moins un des paramètres de l'expérience utilisateur sur la base du score d'expérience utilisateur reçu.

12. Dispositif d'essai (1) selon l'une des revendications précédentes 1 à 11, dans lequel le dispositif de traitement (30) est configuré pour fournir les paramètres d'expérience utilisateur déterminés à un réseau neuronal pour l'entraînement du réseau neuronal.

13. Dispositif d'essai (1) selon la revendication 12, dans lequel le réseau neuronal est configuré pour commander au moins un dispositif (111-114) du système d'infodivertissement automobile (100).

14. Dispositif d'essai pour tester un système d'infodivertissement automobile (100) d'un véhicule (200), la méthode comprenant :
la génération (S1) des données d'essai pour tester le système d'infodivertissement automobile (100) ;
la fourniture (S2) des données d'essai générées au système d'infodivertissement automobile (100) ;
la mesure (S3) d'une réponse du système d'infodivertissement automobile (100) aux données d'essai fournies, dans lequel les signaux reçus sont générés par des composants du système d'infodivertissement automobile (100) ou reçus par des dispositifs d'entrée du système d'infodivertissement automobile (100) ; et
la détermination (S4) d'un certain nombre d'au moins deux paramètres d'expérience utilisateur sur la base de la réponse mesurée du système d'infodivertissement automobile (100), dans lequel la réponse mesurée étant comparée aux données d'essai correspondantes,
dans lequel le nombre d'au moins deux paramètres d'expérience utilisateur comprend au moins deux paramètres parmi les paramètres audio, les paramètres vidéo, les paramètres média, les paramètres de caméra, les paramètres de transmission de données, les paramètres de maintenance ou les paramètres de navigation du système d'infodivertissement automobile.
